(19) Europäisches Patentamt

European Patent Office

Office européen des brevets

(11) **EP 1 469 609 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(21) Anmeldenummer: **04008738.9**

(22) Anmeldetag: **13.04.2004**

(51) Int Cl.:
**H04B 1/38** (2006.01)

(54) **Funk-Übertragungsverfahren und Funk-Übertragungssystem**

Method and system for radio transmission

Procédé et système de transmission radioélectrique

(84) Benannte Vertragsstaaten:
**DE FR GB IT**

(30) Priorität: **15.04.2003 DE 10317549**

(43) Veröffentlichungstag der Anmeldung:
**20.10.2004 Patentblatt 2004/43**

(73) Patentinhaber: **DaimlerChrysler AG**
**70567 Stuttgart (DE)**

(72) Erfinder:
• **Lindenmeier, Stefan**
**89275 Elchingen (DE)**
• **Terzis, Anestis**
**89522 Heidenheim (DE)**

(56) Entgegenhaltungen:
**WO-A-00/11801** **WO-A-02/11382**
**US-A1- 2002 154 679** **US-B1- 6 345 066**

**Beschreibung**

Die Erfindung betrifft ein Funk-Übertragungsverfahren sowie ein Funk-Übertragungssystem.
Mit der wachsenden Zahl elektronischer Endgeräte, die im Alltagsleben eingesetzt werden, ist auch der Bedarf an Lösungen zum Datenaustausch dieser Geräte untereinander in den letzten Jahren angestiegen. So werden beispielsweise elektronisch hinterlegte Adressverzeichnisse in Mobiltelefonen oder elektronische Kalender in Personal Digital Assistants (PDA's) miteinander bzw. mit Computern über Datenschnittstellen synchronisiert. Hierzu wurden in der Vergangenheit primär Kabel mit entsprechenden Adaptern oder Infrarotschnittstellen verwendet. Diese Verfahren weisen jedoch einige Nachteile auf; so ist beispielsweise die räumliche Flexibilität bei der Verwendung der kabelgebundenen Lösung zum Datenabgleich deutlich eingeschränkt, im Fall der Verwendung einer Infrarotschnittstelle ist eine direkte Sichtverbindung zwischen den beteiligten Geräten notwendig, die leicht unterbrochen werden kann.
Als Alternative zu den beiden vorgenannten Möglichkeiten haben sich in den letzten Jahren Systeme und Verfahren, die auf Funkübertragung basieren, etabliert. Zwei wichtige Vertreter der Funk-Übertragungsverfahren zum Datenaustausch zwischen mobilen elektronischen Endgeräten sind Wireless LAN nach dem IEEE-Standard 802.11 und Bluetooth.
Eine ausführliche Beschreibung des Bluetooth-Standards findet sich in der Bluetooth-Spezifikation 1.1, die im Internet unter https://www.bluetooth.org/ frei erhältlich ist. Bluetooth zeigt eine hohe Flexibilität bei der Bildung von Ad-Hoc-Netzen und gewährleistet durch die Verwendung eines Frequency Hopping Spread Spectrum (FHSS) Übertragungsverfahrens in Verbindung mit kurzen Reichweiten eine gewisse Stör- und Abhörsicherheit. Dabei sind jedoch die einzelnen Komponenten des Bluetooth-Übertragungssystemes so aufeinander abgestimmt, dass sich das System nur zur Verwendung mit dem oben genannten Frequency Hopping Spread Spectrum Übertragungsverfahren eignet.

Es ist Aufgabe der vorliegenden Erfindung, ein Funk-Übertragungsverfahren und ein Funk-Übertragungssystem anzugeben, das hinsichtlich seiner einzelnen Verfahrensschritte bzw. seiner Komponenten eine erhöhte Flexibilität zeigt.

Diese Aufgabe wird durch das Funk-Übertragungsverfahren und das Funk-Übertragungssystem mit den in Anspruch 1 und 2 genannten Merkmalen gelöst. Vorteilhafte Weiterbildungen sind Gegenstand der Unteransprüche.

Bei dem erfindungsgemäßen Funk-Übertragungsverfahren werden Steuerdaten und Nutzdaten übertragen oder empfangen. Dabei enthalten die Steuerdaten beispielweise Informationen, die die Übertragung selbst und deren technische Parameter betreffen. Die Nutzdaten enthalten im Wesentlichen die zu übertragende Information selbst, also bspw. Text-, Sprachoder Bilddaten. Erfindungsgemäß werden die Steuerdaten vor einer Aufmodulation auf eine Trägerfrequenz von einem an ein erstes Funk- Übertragungsverfahren angepassten Format in ein an ein zweites Funk-Übertragungsverfahren angepasstes Format transformiert, d. h. die Steuerdaten enthalten nach der genannten Transformation Informationen über die Steuerdaten, die zur Generierung eines Signals für das zweite Funk-Übertragungsverfahren erforderlich sind.

In einer ersten vorteilhaften Ausgestaltung der Erfindung enthalten die Steuerdaten unter anderem Informationen über die für eine Frequency Hopping Spread Spectrum Übertragung zu verwendenden Hoppingfrequenzen, d. h. die Frequenzen, die auf denen nacheinander in schneller Folge die Übertragung erfolgen soll. Erfindungsgemäß werden diese Steuerdaten vor der Aufmodulation auf eine Trägerfrequenz von einem an das Frequency Hopping Spread Spectrum Übertragungsverfahren angepassten Format in ein an ein CDMA-Übertragungsverfahren angepasstes Format transformiert, d. h. die Steuerdaten enthalten nach der genannten Transformation Informationen über die Pseudorandom-Noise-Codes (PN-Codes), die zur Generererierung eines Signals für eine CDMA-Übertragung erforderlich sind.

Eine alternative Ausgestaltung der Erfindung zeigt ein Funk-Übertragungssystem, das aus einem Basisband-Modul und einem Hochfrequenzteil besteht, wobei das Basisband-Modul und der Hochfrequenzteil für voneinander verschiedene Funk-Übertragungsverfahren ausgelegt sind. Zur Anpassung der zwischen Basisband-Modul und Hochfrequenzteil ausgetauschten Signale ist weiterhin eine Anpassschaltung vorgesehen, die es erlaubt, zu sendende und empfangene Signale so aufzubereiten, dass sie jeweils vom Basisband-Modul bzw. vom Hochfrequenzteil verarbeitet werden können. Dabei ist die Anpassschaltung insbesondere geeignet, die Steuerdaten geeignet zu transformieren. Diese Anordnung erlaubt es, Systemkomponenten , die für unterschiedliche Übertragungsverfahren ausgelegt sind, in vorteilhafter Weise miteinander zu kombinieren. Somit werden die Vorteile unterschiedlicher Funk-Übertragungssysteme in einem einzigen Funk-Übertragungssystem vereint.

In einer weiteren vorteilhaften Ausgestaltung der Erfindung ist das Basisband-Modul für ein Frequency Hopping Spread Spectrum (FHSS) Übertragungssystem und das Hochfrequenzteil für ein Code Division Multiple Access (CDMA)-Übertragungssystem ausgelegt. Dabei ist das zum Basisband gehörige Protokollkonzept auf das Frequency Hopping Spread Spectrum-Übertragungssystem und die damit verbundenen verschiedenen Hoppingsequenzen ausgelegt; damit kann es nicht unverändert für einen CDMA Hochfrequenzteil übernommen werden. Somit muss die Kommunikation zwischen dem Basisband-Modul und dem Hochfrequenzteil erweitert werden. Dies geschieht in der folgenden Weise: Der Kanal des Basisband-Moduls, der die Steuerdaten mit der Hoppingsequenz enthält, wird nicht direkt zum Hochfrequenzteil geführt, sondern der erfindungsgemäßen Anpassschaltung zugeleitet. Die Anpassschaltung ordnet dann jeder Vorgabe einer Hoppingsequenz einen PN-Code zu. Damit liefert der Ausgang der Anpassschaltung, der mit dem Hochfrequenzteil verbunden ist, nicht eine Hoppingsequenz, sondern einen PN-Code. Der verwendete Hochfrequenzteil, der nach der Lehre der Erfindung im wesentlichen aus einem CDMA-Transceiver besteht, verarbeitet dann seine Daten mit dem vorgegebenen PN-Code, was dazu führt, dass als Funk-Übertragungsverfahren das störunanfällige, robuste CDMA-Übertragungsverfahren verwendet werden kann.

Eine vorteilhafte Modifikation der Erfindung besteht darin, dass umgekehrt wie im oben geschilderten Fall das Basisband-Modul für ein CDMA-Übertragungssystem und der Hochfrequenzteil für ein FHSS-Übertragungssystem ausgelegt ist.

Wird ein Basisband-Modul verwendet, das für ein FHSS-Übertragungssystem ausgelegt ist, so hat es sich bewährt, das Basisband-Modul eines Bluetooth-Übertragungssystems zu verwenden. Hierbei kann in besonders vorteilhafter Weise der ausgesprochen flexible Bluetooth-Protokollstack verwendet werden, in dem viele bereits vorhandene Protokolle berücksichtigt sind, die bedarfsweise abhängig von der aktuellen Applikation verwendet werden können.

In einer weiteren vorteilhaften Ausgestaltung der Erfindung sind unterschiedliche Codesequenzen des für das CDMA-Übertragungssystem zu verwendenden PN-Codes in einer Speichereinheit der Anpassschaltung hinterlegt. Dabei werden abhängig von der am Eingang der Anpassschaltung anliegenden Hoppingsequenz über eine Auswahllogik entsprechende gespeicherte PN-Codes ausgewählt und zum Ausgang der Anpassschaltung durchgeschaltet. Dieser Aufbau der Anpassschaltung gewährleistet eine schnelle und einfache Zuordnung von Hoppingsequenzen zu PN-Codes. Diese Zuordnung erfolgt in vorteilhafter Weise über eine Zuordnungstabelle, in der für jede vorkommende Hoppingsequenz ein entsprechender PN-Code hinterlegt ist. Diese Zuordnungstabelle ist notwendigerweise für das sendende und das empfangende System dieselbe; die spezifische Zuordnung von Hoppingsequenzen zu PN-Codes erlaubt dabei das Einfügen einer zusätzlichen Verschlüsselungsebene im Gegensatz zum direkten Gewinnen des PN-Codes aus der Hoppingsequenz.

Die Verwendung eines steuerbaren PN-Codegenerators ermöglicht den Verzicht auf die Speichereinheit. Der erfindungsgemäße PN-Codegenerator generiert aus der Vorgabe für eine Hoppingsequenz, die am Eingang der Anpassschaltung anliegt, mittels eines Algorithmus einen PN-Code, der dem Ausgang der Anpassschaltung und damit dem Hochfrequenz-Teil zugeführt wird. Da der Algorithmus flexibel gewählt werden kann, gewährleistet diese Ausführungsform der Erfindung die Möglichkeit, den Algorithmus zur Codegenerierung erst in einem fortgeschrittenen Stadium der Entwicklung der Anpassschaltung festzulegen und sich damit dynamisch an die in der Praxis verwendeten PN-Codes anzupassen.

In einer weiteren vorteilhaften Ausführungsform der Erfindung ist die Anpassschaltung dazu geeignet, den zu verwendenden PN-Code bzw. die Hoppingsequenzen unter Verwendung eines Schieberegisters zu generieren. Dabei wird beispielsweise aus der Hoppingsequenz über eine Auswahllogik mit Zuordnungstabelle ein kurzes Bitwort $S_i$ generiert und dieses dem steuerbaren Codegenerator zuführt. Durch die einzelnen Bitzustände im Bitwort $S_i$ wird dann für jede Speicherzelle im Schieberegister der entsprechende Schalterzustand bestimmt. Vorteilhaft hierbei ist, dass sich durch die Verwendung eines n Bit langen Bitwortes $2^n-1$ verschiedene PN-Codes generieren lassen und sich somit der notwendige Speicherbedarf für die Erzeugung der PN-Codes drastisch reduzieren lässt.

Bei geeigneter Beschaltung des steuerbaren PN-Codegenerators lassen sich die sogenannten M-Codes (Maximum length-Codes) erzeugen. Werden dann zwei bestimmte M-Codes EXOR verknüpft, ergeben sich die sogenannten Gold-Codes, die aufgrund ihrer guten Kreuzkorrelationseigenschaften in vorteilhafter Weise in CDMA-Übertragungssystemen eingesetzt werden können. Hierzu muss die Steuerschaltung jeden der beiden Schieberegister-Codegeneratoren separat ansteuern.

Eine weitere besonders vorteilhafte Ausführungsform der Erfindung besteht darin, CDMA und Frequency Hopping miteinander zu kombinieren. Dabei können Steuerdaten aus den bereits vorhandenen Bluetooth-Protokollen verwendet werden, um die Hoppingsequenzen zu erzeugen. Das FHSS-Übertragungssystem wird hier nicht durch die Verwendung der erfindungsgemäßen Anpassschaltung durch das CDMA-Übertragungssystem ersetzt, sondern nur um das CDMA-Übertragungssystem erweitert, wobei zusätzlich nach wie vor Frequency Hopping erfolgt. Die Kombination der beiden Funk-Übertragungssystem ermöglicht einen höheren Signalrauschabstand und eine zusätzliche Verschlüsselungsmöglichkeit über eine einstellbare Zuordnung zwischen der Hoppingsequenz und der Codesequenz. Damit ergibt sich eine zweidimensionale Verschlüsselung mit der Kombination von n PN-Codes mit m Hoppingsequenzen und somit n*m Kombinationsmöglichkeiten. Somit wird die Verschlüsselungstiefe gegenüber m im Fall des reinen Frequency Hopping Verfahrens um den Faktor n erhöht. Das erfindungsgemäße Übertragungssystem gestattet es dabei, gleichzeitig unter Verwendung eines FHSS- und eines CDMA-Übertragungssystems zu senden oder zu empfangen, womit die Verschlüsselungstiefe sowie die Stör- und Abhörsicherheit des Systems weiter erhöht wird.

Im folgenden werden die theoretischen Hintergründe der Kombination von CDMA und Frequency Hopping näher erläutert. Bei einem reinen CDMA-Übertragungssystem wird die Entkopplung der Kanäle durch die maximalen Werte der Kreuzkorrelationsfunktion zwischen den verwendeten PN-Codes bestimmt. Wird für einen Kanal der PN-Code $c_1$ verwendet und für den zweiten Kanal der PN-Code $c_2$, so ergeben sich drei Kreuzkorrelationsfunktionen, die die Kanalstörung im Empfänger von Kanal 1 beschreiben, welche durch eine mit dem PN-Code $c_2$ belegte Datensequenz (also durch Kanal 2) hervorgerufen. In einem Empfangskorrelator entsteht die Kreuzkorrelationsfunktion $K_{12(11)}$ für verschiedene Zeitverschiebungen $\tau$ zwischen PN-Code $c_1$ und Code $c_2$ immer dann, wenn eine Datensequenz der logischen Folge 1-1 in Kanal 2 übertragen wird. Wird eine Datensequenz der logischen Folge 0-0 in Kanal 2 übertragen, entsteht die Kreuz-korrelationsfunktion $K_{12(00)}$. Im Fall der logischen Folgen 0-1 und 1-0 entstehen die Funktionen $K_{12(01)}$ und $K_{12(10)}$. Sei $c_1(t)$ und $c_2(t)$ eine PN-Codesequenz mit

$$c_{1,2}(t) = \begin{cases} c_{1,2}(t). & 0 < t < T \\ 0 & sonst \end{cases} \tag{1}$$

so gilt für die Kreuzkorrelationsfunktionen:

$$K_{12(11)}(\tau) = \int_0^T c_1(t)\left[c_2(t+T-\tau) + c_2(t-\tau)\right]dt \tag{2}$$

$$K_{12(00)}(\tau) = \int_0^T c_1(t)\left[\overline{c}_2(t+T-\tau) + \overline{c}_2(t-\tau)\right]dt \tag{3}$$

$$K_{12(01)}(\tau) = \int_0^T c_1(t)\left[\overline{c}_2(t+T-\tau) + c_2(t-\tau)\right]dt \tag{4}$$

$$K_{12(10)}(\tau) = \int_0^T c_1(t)\left[c_2(t+T-\tau) + \overline{c}_2(t-\tau)\right]dt \tag{5}$$

Der Signal-Störabstand im Empfänger wird durch das Verhältnis des Autokorrelationspegels der PN-Codes gegenüber dem maximal erreichten Wert Kmax aus den vier Kreuzkorrelationsfunktionen $K_{12(11)}$, $K_{12(00)}$, $K_{12(01)}$ und $K_{12(10)}$ bestimmt.

$$K_{max} = \max\left[\max\left[K_{12(00)}\right], \max\left[K_{12(01)}\right], \max\left[K_{12(10)}\right], \max\left[K_{12(11)}\right]\right] \tag{6}$$

Bestehen die PN-Codes aus n Chip, so ist der Maximalwert der höchste von 4n Korrelationswerten. Nur eine sehr geringe Anzahl von PN-Codes $c_1$ und $c_2$ ist so beschaffen, daß alle vier Kreuzkorrelationsfunktionen für alle Zeit-verschiebungen $\tau$ unter einem Pegel bleiben, welcher gegenüber dem Autokorrelationspegel der PN-Codes gering ist.
Wird nun erfindungsgemäß jede PN-Codesequenz in einer ihr entsprechenden Hoppingsequenz übertragen, so gilt:
In einer vorteilhaften Ausführungsform für kurze PN-Codes kann für alle PN-Codes die selbe Hoppingsequenz verwendet werden, wobei die Frequenz der Hoppingsequenz mit jedem Chip des PN-Codes jeweils eine andere ist. Zwei Kanäle sind daraufhin nur dann noch verkoppelt, wenn deren Hoppingsequenz zeitsynchron, also mit einer Zeit-verschiebung von $\tau = 0$ abläuft. Bei dieser Zeitverschiebung gilt nach Gl. (1) bis (5):

$$K_{12(01)}(0) = K_{12(11)}(0) \quad und \quad K_{12(10)}(0) = K_{12(00)}(0) \qquad (7)$$

In diesem Fall gilt somit für den maximalen Korrelationswert Kmax:

$$K_{max} = \max\left[K_{12(11)}(0), K_{12(00)}(0)\right] \qquad (8)$$

Der Maximalwert ist also nun nur noch der höchste von 2 Korrelationswerten. Es ist nunmehr ein leichtes, viele PN-Codes zu finden, welche kleine Werte für den maximalen Korrelationswert Kmax erreichen. Vor diesem Hintergrund können nun all jene PN-Codes gewählt werden, deren Kreuzkorrelationsfunktion bei der Zeitverschiebung 1 =0 den Wert Kmax =0 (oder einen kleinen Wert gegenüber dem Autokorrelationspegel) hat. Die Anzahl von PN-Codes, welche diese Bedingung erfüllen, ist um ein Vielfaches größer als die Anzahl der PN-Codes, deren Kreuzkorrelationsfunktion bei allen Zeitverschiebungen $\tau$ gemäß Gl. (6) den Wert 0 oder einen kleinen Wert hat.

Es können also eine Vielzahl von PN-Codes mit geringer Länge für die Trennung vieler Kanäle verwendet werden. Aufgrund der geringen PN-Codelänge ist die Band-Aufspreizung deutlich geringer als in einem reinen CDMA-System.

Nachfolgend werden Details und beispielhafte Ausführungsformen der Erfindung anhand einiger Figuren erläutert.

Es zeigen:

Fig. 1 einen schematischen, beispielhaften Aufbau eines erfindungsgemäßen Funk-Übertragungssystems.

Fig. 2 eine beispielhafte erfindungsgemäße Anpassschaltung in ihrer Verwendung für die Übersetzung einer Hoppingsequenz in eine PN-Codesequenz im Sende- und im Empfangsteil einer Kommunikationsstrecke.

Fig. 3 eine vorteilhafte Ausführungsform der Anpassschaltung, bei der eine Speichereinheit verwendet wird.

Fig. 4 eine vorteilhafte Ausführungsform der Erfindung, bei der ein steuerbarer PN-Codegenerator verwendet wird.

Fig. 5 eine bevorzugte detaillierte Darstellung eines steuerbaren Codegenerators.

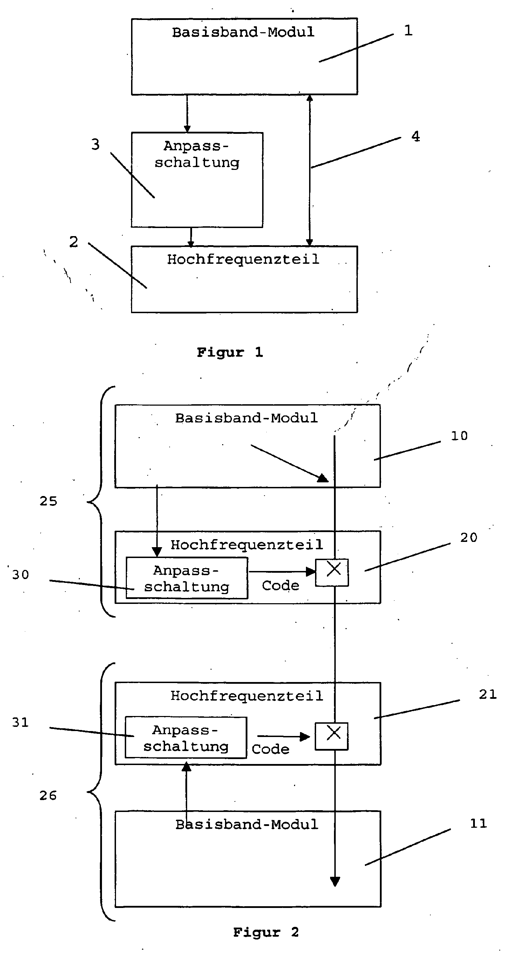

Das in Figur 1 dargestellte erfindungsgemäße Übertragungssystem zeigt ein Basisband-Modul 1, ein Hochfrequenzteil 2 sowie eine Anpassschaltung 3. Am Ausgang des Basisband-Moduls 1 liegen Nutz- und Steuerdaten an, die über den Kommunikationskanal 4 bzw. die Anpassschaltung 3 dem Hochfrequenzteil zugeführt werden. Dabei werden die Steuerdaten, die die Hoppingsequenz vorgeben, nicht direkt zum Hochfrequenzteil geführt, sondern der erfindungsgemäßen Anpassschaltung 3 zugeleitet. Diese hat die Aufgabe, jeder Vorgabe einer Hoppingsequenz einen PN-Code zuzuordnen. Der Ausgang der Anpassschaltung 3 liefert dann keine Vorgabe einer Hoppingsequenz, sondern eine Vorgabe für einen PN-Codes. Der Hochfrequenzteil 2, der in einer Ausführungsform der Erfindung aus einem CDMA Transceiver besteht, muss dann seine Daten mit dem vorgegebenen PN-Code verarbeiten. Bei einem Bluetooth-Übertragungssystem sind für jeden Zustand der beteiligten Geräte spezielle Hoppingsequenzen vorgesehen. Diesen speziellen Hoppingsequenzen wird unter Verwendung der erfindungsgemäßen Anpassschaltung 3 für jeden Zustand ein spezieller PN-Code zugeordnet. Beispielsweise bekommen dann Zustände wie Inquiry (Suche nach Geräten, mit denen eine Verbindung hergestellt werden kann) oder Page (Versuch, eine Verbindung zu einem bekannten Geräten aufzubauen) anstelle der in den Frequency Hopping Spread Spectrum Verfahren verwendeten Aufweck-Hoppingsequenzen einen Aufweck-PN-Code, der für alle Teilnehmer des Netzes identisch ist. Somit wird mit der hier gezeigten Erweiterung eine Anpassung des eines Frequency Hopping Spread Spectrum Verfahrens an das CDMA-Verfahren erreicht. Dabei können die bereits vorhandenen Bluetooth-Protokollstacks, die in Quellcodeausführung vorhanden sind, zur Realisation in vorteilhafter Weise verwendet werden.

Fig. 2 zeigt die erfindungsgemäße Anpassschaltung in ihrer Verwendung für die Übersetzung einer Hoppingsequenz in eine PN-Codesequenz im Sendeteil 25 und im Empfangsteil 26 einer Kommunikationsstrecke. Im Sendeteil 25 der dargestellten Kommunikationsstrecke werden die Steuerdaten, die auch die Hoppingsequenz enthalten, einerseits direkt dem Hochfrequenzteil 20 zugeleitet, andererseits werden die Steuerdaten, die die Hoppingsequenz enthalten, der Anpassschaltung 30 zugeführt, wo aus ihnen der PN-Code für die nachfolgende Übertragung generiert wird. Im Empfangsteil 26 wird die in den Kommunikationsdaten enthaltene Hoppingsequenz über den Hochfrequenzteil 21 und das Basisbandmodul 11 aus den übertragenen Daten gelesen und der Anpassschaltung 31 zugeführt, wo aus der Hoppingsequenz der zugehörige PN-Code abgeleitet bzw. ausgewählt wird.

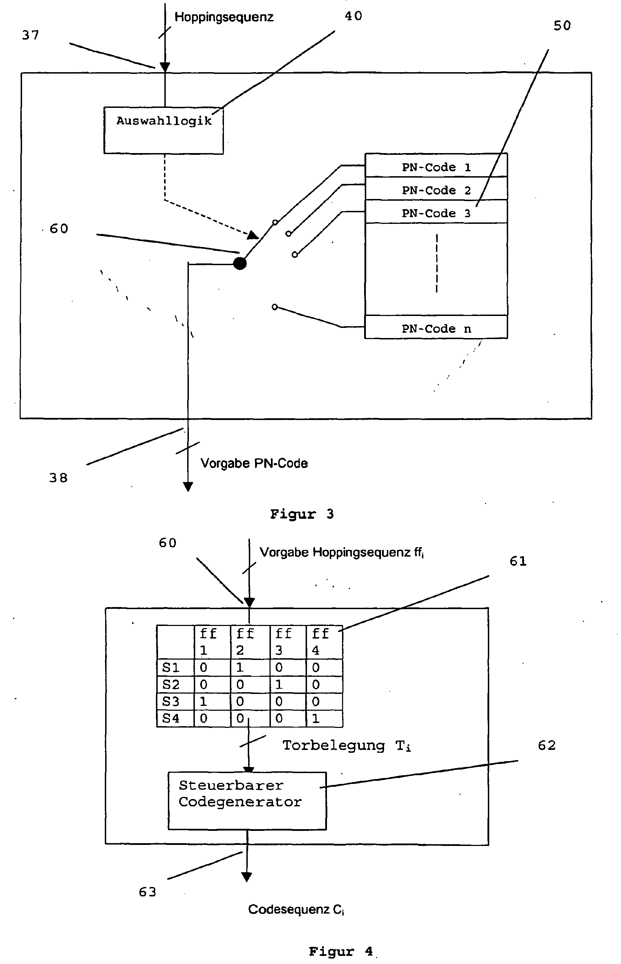

Fig. 3 zeigt eine vorteilhafte Ausführungsform der Anpassschaltung, bei der eine Speichereinheit verwendet wird. Am Eingang 37 der Anpassschaltung liegt die Vorgabe für eine Hoppingsequenz an, die einer Auswahllogik 40 zugeführt wird, die der Hoppingsequenz einen PN-Code aus der Speichereinheit 50 zuordnet. Der Ausgang der Auswahllogik 40 steuert einen Schalter 60, der den entsprechenden PN-Code zum Ausgang 38 der Anpassschaltung durchschaltet. Dabei können die verschiedenen PN-Codes, die in der Speichereinheit 50 gespeichert sind, verschieden lang sein. Der Ein- und Ausgang 37, 38 der Anpassschaltung besteht jeweils aus mehreren Leitungen, wobei die Anzahl dieser Leitungen der PN-Codelänge entspricht.

Fig. 4 zeigt eine weitere vorteilhafte Ausführungsform der Erfindung, bei der ein steuerbarer PN-Codegenerator 62 verwendet wird. Dabei werden beispielsweise PN-Codes mit Hilfe von geeignet rückgekoppelten Schieberegistern erzeugt, wobei der erzeugte PN-Code von der Art der Rückkopplung bzw. der Rückkoppelschaltung abhängt. Bei einem steuerbaren PN-Codegenerator 62 wird die Rückkopplungsschaltung verändert und es werden somit verschiedene PN-Codes generiert. Dabei tritt die vorgegebene Hoppingsequenz $ff_i$ am Eingang 60 in die Anpassschaltung ein und wird der Auswahllogik 61, die eine Zuordnungstabelle für die Verschlüsselung aufweist, zugeleitet. In der Zuordnungstabelle 61 wird jede Hoppingsequenz $ff_i$ ein kurzes Bitwort $S_i$ zugeordnet. Das Bitwort $S_i$ dient zu Ansteuerung des steuerbaren Codegenerators 62, welcher daraufhin eine Codesequenz $C_i$ über den Ausgang 63 der erfindungsgemäßen Anpassschaltung abgibt. Ist die Codelänge des PN-Codes $2^n-1$, so muss die Länge der zu speichernden Bitworte lediglich n sein. Diese Ausführungsform ermöglicht die Einsparung von Speicherplatz, da in diesem Fall nicht die PN-Codes in ganzer Länge $2^n-1$ zu speichern sind, sondern lediglich kurze Bitworte der Länge n.

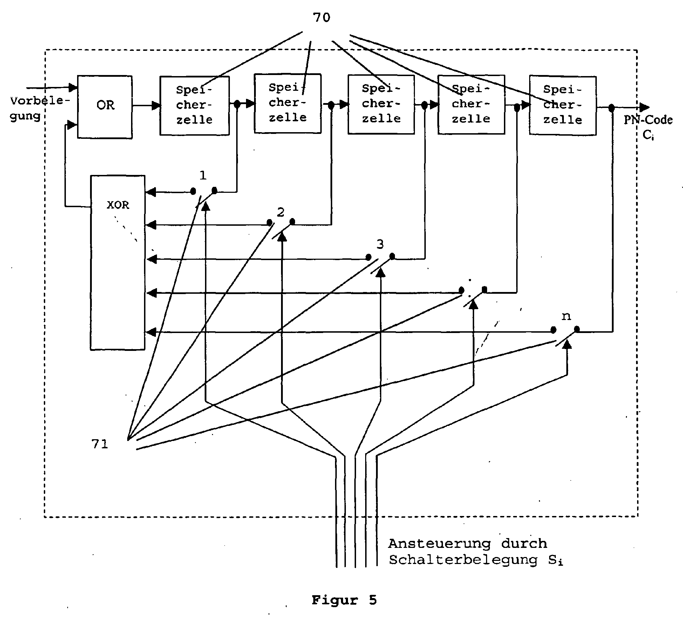

Fig. 5 ist eine detaillierte Darstellung des steuerbaren PN-Codegenerators 62. Aus der Figur geht hervor, dass die Ansteuerung die Rückkopplung des Schieberegisters steuert. In der beispielhaften Ausführungsform der Fig. 6 (Schieberegistercode-PN-Codegenerator mit n Speicherzellen 70) können über die Ansteuerung $2^n-1$ verschiedene PN-Codes erzeugt werden. Dabei werden die Schaltzustände an den Schaltern 71 über die Bitzustände an den korrespondierenden Stellen im Bitwort $S_i$ geregelt. Ist beispielsweise die dritte Stelle des Bitwortes eine logische "0", so ist der dritte Schalter offen; ist die vierte Stelle eine logische "1", so ist der vierte Schalter geschlossen. Darüber hinaus können noch weitere Speicherzellen und entsprechende Rückführungen dazugeschaltet werden, um längere PN-Codes zu generieren.

## Patentansprüche

1. Funk-Übertragungsverfahren, wobei Steuerdaten und Nutzdaten übertragen oder empfangen werden **dadurch gekennzeichnet, dass** die Steuerdaten vor einer Aufmodulation auf eine Trägerfrequenz von einem an ein erstes Funk-Übertragungsverfahren angepassten Format in ein an ein zweites Funk-Übertragungsverfahren angepasstes Format transformiert werden, und
   dass es sich bei dem zweiten Funk-Übertragungsverfahren um ein CDMA-Übertragungsverfahren handelt.

2. Funk-Übertragungssystem mit einem Basisband-Modul und einem Hochfrequenzteil, wobei das Basisband-Modul und der Hochfrequenzteil für voneinander verschiedene Funkstandards zur Übertragung von Nutzdaten unter Verwendung von Steuerdaten ausgelegt sind **dadurch gekennzeichnet, dass** zusätzlich eine Anpassschaltung vorgesehen ist, die geeignet ist, die Steuerdaten des einen Funkstandards in Steuerdaten des anderen Funkstandards umzusetzen, und
   dass das Hochfrequenzteil für ein CDMA-Übertragungssystem ausgelegt ist.

3. Funk-Übertragungssystem nach Anspruch 2,
   **dadurch gekennzeichnet,**
   **dass** das Basisband-Modul für den Bluetooth-Standard ausgelegt ist.

4. Funk-Übertragungssystem nach einem der Ansprüche 2-3,
   **dadurch gekennzeichnet,**
   **dass** die Anpassschaltung eine Speichereinheit aufweist, in der die Zuordnungsvorschriften für unterschiedliche Pseudorandom-Noise-Codesequenzen zu entsprechenden Hoppingsequenzen hinterlegt sind.

5. Funk-Übertragungssystem nach einem der Ansprüche 2-4,
   **dadurch gekennzeichnet,**
   **dass** die Anpassschaltung geeignet ist, aus Parametern für eine Hoppingsequenz Parameter für eine Pseudorandom-Noise-Codesequenz zu generieren oder umgekehrt.

6. Funk-Übertragungssystem nach Anspruch 5,
   **dadurch gekennzeichnet,**
   **dass** die Anpassschaltung geeignet ist, die Parameter für die Pseudorandom-Noise-Codesequenzen bzw. die Hoppingsequenzen unter Verwendung eines Schieberegisters zu generieren.

7. Funk-Übertragungssystem nach einem der Ansprüche 5 oder 6,
   **dadurch gekennzeichnet,**
   **dass** die Anpassschaltung geeignet ist, Parameter für Gold-Codes als Pseudorandom-Noise-Codesequenzen zu erzeugen.

8. Funk-Übertragungssystem nach einem der vorangehenden Ansprüche 2-7,
   **dadurch gekennzeichnet,**
   **dass** der Hochfrequenzteil geeignet ist, innerhalb einer Übertragung das CDMA-Übertragungsverfahren sowie das Frequency Hopping Spread Spectrum Übertragungsverfahren gleichzeitig überlagert zu realisieren.


**Claims**

1. Radio transmission method, whereby control data and user data are transmitted or received, **characterized in that** the control data, before being modulated onto a carrier frequency, are transformed from a format adapted to a first radio transmission method into a format adapted to a second radio transmission method, and
   **characterized in that**
   the second radio transmission method is a CDMA transmission method.

2. Radio transmission system with a baseband and a radio frequency part, whereby the baseband module and the radio frequency part are designed for different radio standards for transmission of user data using control data, **characterized in that** an adaptation circuit is additionally provided, which is suitable for converting the control data of the one radio standard into control data of the other radio standard, and
   **characterized in that**
   the radio frequency part is designed for a CDMA transmission system.

3. Radio transmission system according to Claim 2,
   **characterized in that**
   the baseband module is designed for the Bluetooth standard.

4. Radio transmission standard according to one of Claims 2-3,
   **characterized in that**
   the adaptation circuit has a memory unit, in which the allocation rules for different pseudo-random noise code sequences for corresponding hopping sequences are stored.

5. Radio transmission system according to one of Claims 2-4,
   **characterized in that**
   the adaptation circuit is suitable for generating parameters for a pseudo-random noise code sequence from parameters for a hopping sequence, and vice versa.

6. Radio transmission system according to Claim 5,
   **characterized in that**
   the adaptation circuit is suitable for generating the parameters for the pseudo-random noise code sequences and the hopping sequences using a shift register.

7. Radio transmission system according to one of Claims 5 or 6,
   **characterized in that**
   the adaptation circuit is suitable for generating parameters for Gold codes as pseudo-random noise code sequences.

8. Radio transmission system according to one of the preceding Claims 2-7,
   **characterized in that** the radio frequency part is suitable for implementing the CDMA transmission method and the Frequency Hopping Spread Spectrum transmission method simultaneously overlaid within a transmission.

**Revendications**

1. Procédé de transmission radioélectrique, dans lequel on transmet et on reçoit des données de commande et des données utiles, **caractérisé en ce que** les données de commande sont transformées, avant une modulation sur une fréquence porteuse, d'un format adapté à un premier procédé de transmission radioélectrique à un format adapté à un deuxième procédé de transmission radioélectrique, et **en ce que** le deuxième procédé de transmission radioélectrique est un procédé de transmission CDMA.

2. Système de transmission radioélectrique avec un module à bande de base et une partie à haute fréquence, dans lequel le module à bande de base et la partie à haute fréquence sont conçus selon des standards radioélectriques différents l'un de l'autre pour la transmission de données utiles avec utilisation de données de commande, **caractérisé en ce qu'**il est prévu en outre un circuit d'adaptation, qui convient pour transformer les données de commande d'un standard radioélectrique en données de commande de l'autre standard radioélectrique, et **en ce que** la partie à haute fréquence est conçue pour un système de transmission CDMA.

3. Système de transmission radioélectrique selon la revendication 2, **caractérisé en ce que** le module à bande de base est conçu pour le standard Bluetooth.

4. Système de transmission radioélectrique selon la revendication 2 ou 3, **caractérisé en ce que** le circuit d'adaptation comprend une unité de mémoire, dans laquelle sont stockées les prescriptions d'association pour différentes séquences de codes de bruit pseudo-aléatoire avec des séquences de sauts correspondantes.

5. Système de transmission radioélectrique selon l'une quelconque des revendications 2 à 4, **caractérisé en ce que** le circuit d'adaptation convient pour générer des paramètres pour une séquence de codes de bruit pseudo-aléatoire à partir de paramètres pour une séquence de sauts, et inversement.

6. Système de transmission radioélectrique selon la revendication 5, **caractérisé en ce que** le circuit d'adaptation convient pour générer les paramètres pour la séquence de codes de bruit pseudo-aléatoire, respectivement les séquences de sauts, en utilisant un registre à décalage.

7. Système de transmission radioélectrique selon la revendication 5 ou 6, **caractérisé en ce que** le circuit d'adaptation convient pour produire des paramètres pour des codes Gold comme séquences de codes de bruit pseudo-aléatoire.

8. Système de transmission radioélectrique selon l'une quelconque des revendications précédentes 2 à 7, **caractérisé en ce que** la partie à haute fréquence convient pour réaliser, à l'intérieur d'une transmission, le procédé de transmission CDMA ainsi que le procédé de transmission par spectre étendu à sauts de fréquence simultanément en superposition.

**Figur 1**

**Figur 2**

Figur 3

Figur 4

70

Vorbelegung

OR → Speicherzelle → Speicherzelle → Speicherzelle → Speicherzelle → Speicherzelle → PN-Code
$C_i$

XOR

1

2

3

n

71

Ansteuerung durch
Schalterbelegung $S_i$

**Figur 5**